# EUROPEAN PATENT SPECIFICATION

(11) **EP 2 261 121 B1**
(45) Date of publication and mention of the grant of the patent: **31.10.2012**
(21) Application number: 09162404.9
(22) Date of filing: 10.06.2009
(51) Int. Cl.: B64D 10/00

(54) **Error detection system for G-suit**
Fehlererkennungssystem für einen Anti-G-Anzug
Système de détection d'erreurs pour combinaison anti-G

(43) Date of publication of application: 15.12.2010
(73) Proprietor: SAAB AB, 581 88 Linköping (SE)
(72) Inventor: Fisk, Fredrik, 58665 Linköping (SE); Fransson, Karl-Gustav, 582 53 Linköping (SE); Johansson, Rikard, 582 37 Linköping (SE)
(74) Representative: Norberg, Charlotte

(56) References cited:
- WO-A-95/25038
- WO-A-03/053780
- US-A- 2 558 805
- US-A- 4 858 620
- US-A1- 2004 040 064

## Description

The invention relates to systems and methods for detecting a malfunction in the pressure control system of a pilot's G-suit. It also relates to systems and methods for issuing an alarm signal, if an error occurs.

### Background of the Invention

Various systems for reducing the effects of high G-forces for aircraft pilots are known in the art.

For example, a system for reducing the effects of high G-forces on aircraft pilots is known from US 4,906,990. A fluid pressure sensor is integrated within the pressure control loop, outside the G-suit. A G-suit is filled with liquid at an adjustable pressure. Additionally, the liquid pressure of the G-suit is monitored by a controller and an alarm signal is provided to the crew member in case the liquid pressure exceeds an acceptable tolerance of error.

US 2004/0254490 A1 describes a device for measuring the respiration rate and the breathing pattern of a person wearing an anti-blackout suit (G-suit). A pressure measurement cell is located inside a liquid-filled "vein" of the anti-blackout suit, not between the G-suit and the wearer of the G-suit. The anti-blackout suit contains a liquid at an adjustable pressure. An evaluation apparatus processes the measurement values. It is either linked via an optocoupler, a cable or wirelessly to the pressure measurement cell.

US 4,243,024 discloses a G-protection system that regulates the air pressure within air bladders of trousers of a G-suit. The pressure transducer is located outside the G-suit.

GB 2334794 A describes a system for controlling the pressure of a fluid in a life support system including a G-suit. The pressure sensor is located in a hose connected to the G-suit.

The above error detection systems are physically connected to the G-suit or to the pressure control system. Error detection systems of the prior art are thus integral with the pressure control system or G-suit and can only be used for the specific system they are connected to. It is normally not possible to use the error detection system with different G-suits, different types of G-suits or different aircrafts, without significant effort. The error detection units of the prior art are not portable from one system to the other. The physical connection of prior art error detection systems to the G-suits or pressure control systems further makes it difficult to replace the complete error detection system, if it is defective.

### Summary of the Invention

There is thus a need in the art for error detection systems which can be used with different G-suits and aircrafts. There is also a need for error detection systems which can easily be replaced, if defective.

The above problems are solved by the present invention by providing an error detection system having a pressure sensing unit adapted to be worn between the G-suit and the wearer, wherein the pressure sensing unit is not fixedly attached to the G-suit. The error detection system of the invention is thus a modular system which can be used with various G-suits and various aircrafts.

Error detection systems of the invention monitor the pressure in a G-suit, independently from the pressure sensors of the pressure control system, which is responsible for the pressure control of the G-suit. The pressure can be produced by pressurized gas or liquid. Error detection systems of the invention detect errors in a pressure control system without being part of it.

The error detection system comprises at least one pressure sensing unit, a transmitter and a receiver. The pressure sensing unit is preferably a portable device. The pressure sensing unit is adapted to be worn between the G-suit and a wearer of the G-suit. The pressure sensor is not fixedly attached to the G-suit. It is thus *not un-releasably* connected to the G-suit (this includes a releasable connection, as well as no physical connection at all).

The present invention hence relates to an error detection system for the detection of a malfunction of a pressure control system for a G-suit, said error detection system comprising the technical features of independent claim 1.

The invention further relates to methods for the detection of an error in a pressure control system of a G-suit, said method comprising the method steps of claim 11.

### Brief Description of the Drawings

Figure 1 is a schematic diagram of an error detection system of the invention.
Figure 2 shows the placement of the pressure sensor unit.
Figure 3 describes hypothetical a pressure versus time curve, during a flight maneuver.

### Detailed Description of the Invention

The present invention relates to error detection systems and methods for detecting an error as defined in the independent claims.

In a preferred embodiment of the invention, the connection between receiver 16 and error detection unit 19 is a physical data connection, e.g. a wire. The connection may comprise a plug and socket connection. The connection may also be wireless.

The error detection unit 19 may be part of the aircraft computer 17. The error detection unit 19 detects a malfunction of the pressure control system.

A system according to the invention may have multiple pressure sensing units 13 connected to the transmitter 12. Systems of the invention can additionally comprise sensors for sensing biological data such as blood pressure, heart rate, body temperature, transpiration, breathing rate and other biological parameters.

The transmitter 12 may be adapted to process pressure data (and optionally biological data) received from the sensing units 13 before transmitting the data to the receiver 16. Data processing may consist of compression of data, or storage of data. The transmitter 12 is preferably equipped with a memory unit for recording data.

The transmitter 12 as well as the pressure sensing unit 13 may be equipped with a portable source of electrical energy, such as a battery, a rechargeable battery, or a fuel cell.

Transmitter 12 and the pressure sensing unit 13 may be separate units, but they may also be physically connected to each other. Preferably the transmitter 12 and the pressure sensing unit 13 are combined to a single unit, e.g. by providing the pressure sensing unit 13 and transmitter 12 in a single housing. This single unit preferably communicates directly with the receiver 16. Multiple of these combined units 12, 13 can be included in one error detection system of the invention.

According to another preferred embodiment of the invention the receiver 16 is physically connected to said error detection unit 19. The physical connection may be by wire, or by a transmission line on a printed circuit. The receiver 16 may, however, also stand in wireless connection to the transmitter 12.

A system of the present invention may also comprise an alarm system for providing an alarm signal upon detection of said malfunction.

The expected pressure of the G-suit in known flight maneuvers may also be stored in a look-up table. The access to this data preferably creates no substantial time delay.

The method may comprise issuing of an alarm signal upon detection of malfunction of the pressure control system.

The data communication between pressure sensing unit 13 and transmitter 12 as well as between transmitter 12 and receiver 16 can be implemented by a wired connection 25, but is preferably established by wireless connection.

The advantage of the wireless data communication is that bulky wiring is avoided. Wireless communication between small and portable components, according to the invention, gives the pilot more mobility in his cockpit.

Receiver 16 may use a physical data connection such as serial link 18 for data transfer to the error detection unit 19 and/or to the aircraft computer 17. Serial link 18 to aircraft computer 17 may be a standard external interface, for example RS422, RS485 or ARINC.

Multiple pressure sensing units 13 can be used. They can be placed at more than one location under the G-suit. This provides for a redundant, fault-tolerant and more accurate pressure sensing.

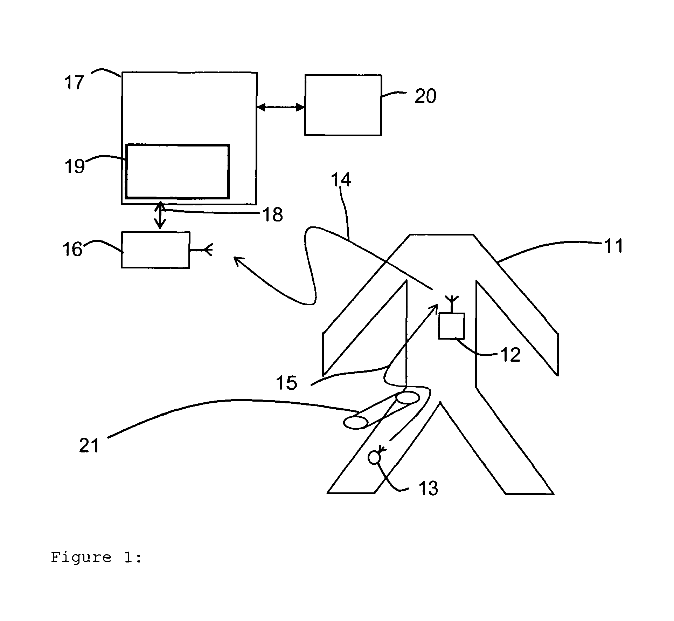

The present invention is shown in Figure 1. The present invention relates to an error detection system comprising a pressure sensing unit 13, responsible for measuring the pressure in a G-suit, a transmitter 12 that transmits data from the pressure sensing unit 13 to a receiver 16, which forms the interface between transmitter 12 and error detection unit 19, which is shown as being integrated within the aircraft computer 17.

The error detection system has a modular structure. The modular structure allows easy expansion of the error detection system by additional sensors 13 or transmitters 12.

The error detection system of the invention can be used with various G-suits 11 and aircrafts, since it is self-sufficient and does not rely on components of the G-suit 11 or of the aircraft. The pressure within the G-suit 11 is established via conduit 21.

Portability of the pressure sensing unit 13 is preferably increased by wireless data communication 14, 15 between pressure sensing unit 13, transmitter 12 and/or receiver 16.

The pressure sensing unit 13 may be provided in a rounded housing, preferably made of plastic or metal. The housing is preferably small, e.g. as a palm of a hand or even smaller.

The pressure sensing unit may be a differential pressure sensor, or may be an absolute pressure sensor. Various types of pressure sensors can be used, according to the invention. Preferred pressure sensors are the following:

Fiber optic sensors: This technology uses the properties of fiber optics to affect light propagating in a fiber such that it can be used to form sensors. Pressure sensors can be made by constructing miniaturized fiber optic interferometers to sense nanometer scale displacement of membranes. Pressure can also be made to induce loss into a fiber to form intensity based sensors.

Mechanical deflection sensors: This technology uses the mechanical properties of a liquid to measure its pressure. Such as, the effect of pressure on a spring system and the changes of compression of spring can be used to measure pressure.

Strain gauge sensors: A strain gauge makes use of the changes in resistance that some materials experience due to change in its stretch or strain. This technology makes use of the change of conductivity of material when experiencing different pressures and calculates that difference and maps it to the change of pressure.

Semiconductor piezoresistive sensors: This technology uses the change in conductivity of semiconductors due to the change in pressure to measure the pressure.

Microelectromechanical systems (MEMS): This technology combines microelectronics with tiny mechanical systems into microelectromechanical systems such as valves, gears, and any other mechanical systems all on one semiconductor chip using nanotechnology to measure pressure.

Variable capacitance sensors: This technology uses the change of capacitance due to change of the distance between the plates of a capacitor because of change in pressure to calculate the pressure.

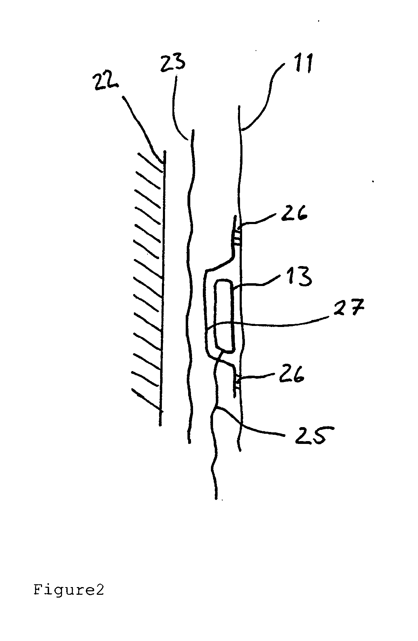

Figure 2 shows how a pressure sensing 13 unit may be arranged between the G-suit 11 and the leg of a pilot 22. Pressure sensing unit 13 is attached to G-suit 11 in a releasable fashion 26. The pressure sensing unit is not fixedly attached to the G-suit 11. The pressure sensing means 13 is thus *not un-releasably* connected to the G-suit 11. (This includes a releasable connection, as well as no physical connection at all.) The pressure sensing unit 13 can be held in place in various ways. For example, pressure sensing unit 13 can be held in place by a rubber strap, said rubber strap being positioned around the pilot's leg 22. In another embodiment a hook-and-loop fastener, e.g. Velcro 26, is used to hold the pressure sensing unit 13 in place. Furthermore, a releasable connection, e.g. a pressure-sensitive adhesive 26, can be used to hold pressure sensor 13 in place. It shall be emphasized that the releasable connection 26 does not fixedly attached the pressure sensor to the G-suit 11. The pressure sensing unit 13 may also be held in place by a releasable adhesive tape or a snap fastener. Other possibilities to hold pressure sensing unit 13 in place are by magnetic means. Alternatively, a lockable pocket 27 may be used on the interior of the G-suit, provided that the lockable pocket 27 can be opened, if desired.

The pressure sensing unit 13 is separate from, i.e. not integral with, the G-suit 11. The pressure sensing unit 13 senses the pressure applied by the G-suit 11 on the pilot's leg 22, which roughly corresponds to the established pressure within the G-suit 11.

The system of this invention monitors the pressure of a pilot's G-suit 11. In case that the pressure of the G-suit exceeds certain pressure limits, the error detection system warns the pilot immediately that a malfunction has occurred

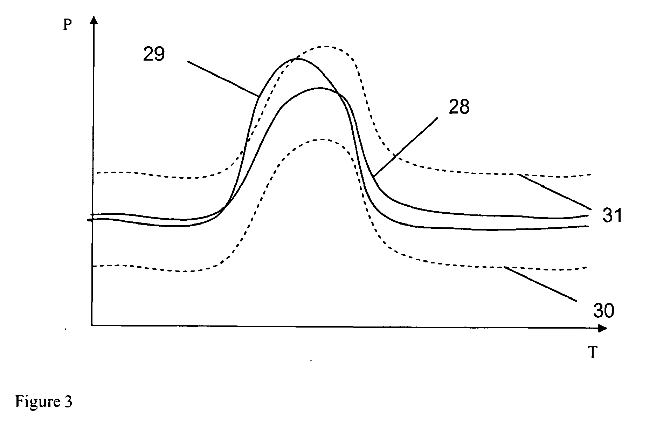

Figure 3 shows a typical pressure versus time distribution of a flight maneuver. The expected pressure distribution in the G-suit 11 during this flight maneuver is shown as curve 28. Line 30 and 31 specify the pressure tolerance band which defines the boundaries of the allowed pressure range. If the error detection system detects pressure data outside of this tolerance band then an alarm signal is triggered. Assuming that the pilot is suddenly performing a climb flight after he did a level flight, the pressure should follow curve 28. The actual pressure within the G-suit 11, expressed by curve 29, runs outside the pressure tolerance band 30, 31. Thereupon the error detection system issues an alarm signal.

Transmitter 12 collects pressure measurement data coming from the pressure sensing unit 13 and processes the received data. Processing of received data may include data encoding and/or data compression.

Receiver 16 preferably establishes the link between transmitter 12 and error detection unit 19. Error detection unit 19 evaluates the measured pressure data. Error detection unit 19 may be included in the aircraft computer 17.

In case of malfunction an alarm signal may be displayed on a display unit 20 of the aircraft. This warns the pilot when a malfunction of the pressure control system occurs.

In one embodiment of the invention the error detection unit 19 analyzes the pressure data, and in case of a malfunction the display unit 20 of the aircraft computer 17 is activating an error code with a short description appearing on the screen of the aircraft cockpit. This serves as a warning to the pilot. Error detection unit 19 may also trigger a signal that is sent to the ground control station. This signal may consist of a report. Preferably the report does not only contain information about the detected error, but also contains information on the state of health of the pilot, if available, and on the condition of the aircraft. This allows the ground control station to take control over the aircraft, if required.

The error detection unit 19 may be able to actuate the auto pilot of the aircraft, when an error condition occurs. The error detection unit 19 preferably logs pressure data during flight. The error detection unit 19 may also be able to create a report comprising physical parameters such as G-force, acceleration, speed, angular rate, altitude, or environmental parameters.

The error detection unit 19 as well as transmitter 12 and pressure sensing unit 13 (and additional sensors used to capture biological data) are preferably equipped with a memory unit. This memory unit may be adapted to record data.

The error detection of the present invention is achieved by comparison of measured pressure data with expected pressure data. The expected pressure data is preferably obtained from a simulation. The simulation model preferably uses a physical model.

The simulation model calculates expected pressure data from various parameters, such as measured G-force, vertical and/or horizontal acceleration, flight path angle, altitude, speed, and flight control information. The calculation of the expected pressure data can be based on a mathematical formula, a look-up table, or can be based on fuzzy logic or on a neural net.

The simulation model of error detection unit 19 preferably comprises a learning functionality. It is preferably capable of analyzing e.g. pressure of G-suit, biological parameters, altitude, G-force, speed, acceleration, flight path angle, wind, precipitation) the learning functionality thus adapts the algorithm to unprecedented flight conditions. Additionally the recorded data may be used for analyzing the pilots' behavior during a flight. In this case it is advantageous that physical parameters are available from biological sensors.

In a preferred embodiment the simulation model calculates the expected pressure data directly from a measured G-force, using a mathematical formula, or the expected pressure data is established from a look-up table. The look-up table conveniently contains G-forces and the corresponding expected pressure data. A mapping of detected G-forces onto expected pressure data is performed. Preferably, the mapping of G-forces onto expected pressure data comprises interpolation of the data in the look-up table. The look-up table may contain historical data, such as historical G-force data and corresponding historical pressure data. For example, a climb flight may impose 5G on a pilot's body and thereupon a pressure of approximately 50 kPa may be generated in the pants of the G-suit 11.

The simulation models used for the calculation of expected pressure data may be adapted to different aircraft types, to account for a different flight behavior in same flight situations.

## Claims

1. An error detection system arranged to detect a malfunction of a pressure control system of a G-suit (11), said error detection system comprising:
said G-suit
a pressure sensing unit (13) arranged to establish pressure data representing the pressure in said G-suit (11),
a transmitter (12) communicating with said pressure sensing unit (13), said transmitter (12) being arranged to transmit said pressure data,
a receiver (16) arranged to receive said pressure data transmitted from said transmitter (12), and
an error detection unit (19) connected to said receiver (16) and arranged to detect a malfunction of said pressure control system by comparison of said pressure data with data related to expected pressure in the G-suit
**characterized in that**
said pressure sensing unit (13) in use is worn between the G-suit (11) and a wearer (22) of said G-suit, **in that** said pressure sensing unit (13) in use is not fixedly attached to said G-suit (11).

2. The system as claimed in claim 1, wherein said receiver (16) stands in wireless connection (14) to said transmitter (12).

3. The system as claimed in claim 1 and claim 2, wherein said pressure sensing unit (13) comprises multiple pressure sensors.

4. The system of any one of the above claims, said system further comprising a sensor for a sensing a biological parameter such as blood pressure, heart rate, body temperature, transpiration, breathing rate and other biological parameters.

5. The system of any one of the above claims, wherein said transmitter (12) is adapted to process said pressure data and/or data from said sensor for sensing a biological parameter prior to transmitting.

6. The system of any one of the above claims, wherein said transmitter (12) and/or said pressure sensing unit (13) are equipped with a memory unit for recording pressure data.

7. The system of any one of the above claims, wherein said transmitter (12) and/or said pressure sensing unit (13) are equipped with a portable source of electrical energy.

8. The system of any one of the above claims, wherein said transmitter (12) and said pressure sensing unit (13) are combined to a single unit.

9. The system of.claim 1, wherein said data related to expected pressure is obtained by simulation.

10. The system of any one of the above claims, said system further comprising an alarm system for providing an alarm signal upon detection of said malfunction.

11. A method for the detection of an error in a pressure control system of a G-suit (11), said method comprising:
establishing pressure data representing the pressure in a G-suit (11) using a pressure sensing unit (13),
transmitting said pressure data by a transmitter (12) connected to said pressure sensing unit (13);
receiving said pressure data by a receiver (16) from said transmitter (12),
detecting a malfunction of said pressure control system from said pressure data using an error detection unit (19) connected to said receiver (16),
wherein said detection of a malfunction is done by comparison of said pressure data with data related to expected pressure in the G-suit
**characterized in that**
said pressure data is established by a pressure sensor unit (13) adapted to be worn between the G-suit (11) and a wearer (22) of the G-suit and said pressure sensing unit (13) is not fixedly attached to the G-suit (11).

12. Method according to claim 11, wherein said transmitting of said pressure data is by wireless transmission (14, 15).

13. Method according to claim 11, wherein said detection of a malfunction is by comparison of said pressure data with expected pressure data obtained by simulation.

14. Method according to claim 11 and claim 13 that provides an alarm signal upon detection of said malfunction using an alarm system.

## Patentansprüche

1. Fehlererkennungssystem, welches zur Erkennung einer Funktionsstörung eines Druckregelungssystems für einen G-Anzug (11) ausgebildet ist, welches Fehlererkennungssystem umfasst:
den G-Anzug
eine Drucksensoreinheit (13), welche zur Erzeugung von den Druck in dem G-Anzug (11) darstellenden Druckdaten ausgebildet ist,
einen mit der Drucksensoreinheit (13) kommunizierenden Sender (12), welcher (12) zur Übermittlung der Druckdaten ausgebildet ist,
einen Empfänger (16), welcher zum Empfangen der von dem Sender (12) übermittelten Druckdaten ausgebildet ist, und
eine mit dem Empfänger (16) verbundene Fehlererkennungseinheit (19),
welche zur Erkennung einer Funktionsstörung des Druckregelungssystems durch einen Vergleich der Druckdaten mit Daten, die den erwarteten Druck in dem G-Anzug betreffen, ausgebildet ist,
**dadurch gekennzeichnet, dass**
die verwendete Drucksensoreinheit (13) zwischen dem G-Anzug (11) und einem Träger (22) des G-Anzugs getragen wird, wobei die verwendete Drucksensoreinheit (13) nicht fest am G-Anzug (11) befestigt ist.

2. System nach Anspruch 1, wobei der Empfänger (16) in drahtloser Verbindung (14) mit dem Sender (12) steht.

3. System nach Anspruch 1 und Anspruch 2, wobei die Drucksensoreinheit (13) eine Mehrheit von Drucksensoren umfasst.

4. System nach einem der vorgehenden Ansprüche, welches System ferner einen Sensor zur Messung eines biologischen Parameters, wie beispielsweise des Blutdrucks, der Herzfrequenz, der Körpertemperatur, der Transpiration, der Atemfrequenz und anderer biologischen Parameter aufweist.

5. System nach einem der vorgehenden Ansprüche, wobei der Sender (12) zur Verarbeitung der Druckdaten und/oder der Daten des Sensors zur Messung eines biologischen Parameters vor einer Übermittlung ausgebildet ist.

6. System nach einem der vorgehenden Ansprüche, wobei der Sender (12) und/oder die Drucksensoreinheit (13) mit einer Speichereinheit zur Aufzeichnung von Druckdaten ausgestattet sind.

7. System nach einem der vorgehenden Ansprüche, wobei der Sender (12) und/oder die Drucksensoreinheit (13) mit einer tragbaren Quelle elektrischer Energie ausgestattet sind.

8. System nach einem der vorgehenden Ansprüche, wobei der Sender (12) und die Drucksensoreinheit (13) zu einer einzigen Einheit kombiniert sind.

9. System nach Anspruch 1, wobei die den erwarteten Druck betreffenden Daten durch Simulation erhalten werden.

10. System nach einem der vorgehenden Ansprüche, welches system ferner ein Alarmsystem zur Erzeugung eines Alarmsignals bei Erkennung der Funktionsstörung umfasst.

11. Verfahren zur Erkennung eines Fehlers in einem Druckregelungssystem eines G-Anzugs (11), welches Verfahren umfasst:
Herstellung von Druckdaten, die den Druck in einem G-Anzug (11) darstellen, unter Anwendung einer Drucksensoreinheit (13),
Übermittlung der Druckdaten durch einen mit der Drucksensoreinheit (13) verbundenen Sender (12),
Empfang der Druckdaten von dem Sender (12) durch einen Empfänger (16),
Erkennung einer Funktionsstörung des Druckregelungssystems auf den Druckdaten basierend unter Anwendung einer mit dem Empfänger (16) verbundenen Fehlerdetektionseinheit (19), wobei die Erkennung einer Funktionsstörung durch einen Vergleich der Druckdaten mit Daten, die den erwarteten Druck in dem G-Anzug betreffen, erfolgt, **dadurch gekennzeichnet, dass** die Druckdaten durch eine zum Tragen zwischen dem G-Anzug (11) und einem Träger (22) des G-Anzugs ausgebildete Drucksensoreinheit (13) hergestellt werden, und dass die Drucksensoreinheit (13) nicht fest am G-Anzug (11) befestigt ist.

12. Verfahren nach Anspruch 11, wobei die Übermittlung der Druckdaten durch drahtlose Übertragung (14, 15) erfolgt.

13. Verfahren nach Anspruch 11, wobei die Erkennung einer Funktionsstörung durch einen Vergleich der Druckdaten mit erwarteten, durch Simulation erhaltenen Druckdaten erfolgt.

14. Verfahren nach Anspruch 11 und Anspruch 13, wobei bei Erkennung der Funktionsstörung unter Anwendung eines Alarmsystems ein Alarmsignal erzeugt wird.

## Revendications

1. Système de détection d'erreur agencé pour la détection d'un dysfonctionnement d'un système de régulation de pression pour une combinaison anti-G (11), ledit système de détection d'erreur comprenant:
ladite combinaison anti-G,
une unité de détection de pression (13) agencée pour établir des données de pression représentant la pression dans ladite combinaison anti-G (11),
un émetteur (12) communiquant avec ladite unité de détection de pression (13), ledit émetteur (12) étant agencé pour transmettre lesdites données de pression,
un récepteur (16) destiné à recevoir lesdites données de pression transmises dudit émetteur (12), et
une unité de détection d'erreur (19) reliée audit récepteur (16) et agencée pour détecter un dysfonctionnement dudit système de régulation de pression par comparaison desdites données de pression avec des données relatives à la pression attendue dans la combinaison anti-G,
**caractérisé en ce que**
ladite unité de détection de pression (13) lors de l'usage est portée entre la combinaison anti-G (11) et un porteur (22) de ladite combinaison anti-G, et
**en ce que** ladite unité de détection de pression (13) lors de l'usage n'est pas solidaire de ladite combinaison anti-G (11).

2. Système selon la revendication 1, dans lequel ledit récepteur (16) est en liaison sans fil (14) audit émetteur (12).

3. Système selon la revendication 1 et la revendication 2, dans lequel ladite unité de détection de pression (13) comprend plusieurs capteurs de pression.

4. Système selon l'une quelconque des revendications précédentes, ledit système comprenant en outre un capteur pour détecter un paramètre biologique, tel que la tension artérielle, la fréquence cardiaque, la température du corps, la transpiration, les taux des échanges respiratoires et d'autres paramètres biologiques.

5. Système selon l'une quelconque des revendications précédentes, dans lequel ledit émetteur (12) est adapté pour traiter lesdites données de pression et/ou des données provenant dudit capteur pour détecter un paramètre biologique avant la transmission.

6. Système selon l'une quelconque des revendications précédentes, dans lequel ledit émetteur (12) et/ou ladite unité de détection de pression (13) sont équipés d'une unité de mémoire pour enregistrer des données de pression.

7. Système selon l'une quelconque des revendications précédentes, dans lequel ledit émetteur (12) et/ou ladite unité de détection de pression (13) sont équipés d'une source portable d'énergie électrique.

8. Système selon l'une quelconque des revendications précédentes, dans lequel ledit émetteur (12) et ladite unité de détection de pression (13) sont combinés à une seule unité.

9. Système selon la revendication 1, dans lequel lesdites données relatives à la pression attendue sont obtenues par simulation.

10. Système selon l'une quelconque des revendications précédentes, ledit système comprenant en outre un système d'alarme pour fournir un signal d'alarme lors de la détection dudit dysfonctionnement.

11. Procédé pour la détection d'une erreur dans un système de régulation de pression d'une combinaison anti-G (11), ledit procédé comprenant:
établir des données de pression représentant la pression dans une combinaison anti-G (11) en utilisant une unité de détection de pression (13),
transmettre lesdites données de pression par un émetteur (12) relié à ladite unité de détection de pression (13);
recevoir lesdites données de pression par un récepteur (16) à partir dudit émetteur (12),
détecter un dysfonctionnement dudit système de régulation de pression à partir desdites données de pression en utilisant une unité de détection d'erreur (19) reliée audit récepteur (16),
dans lequel ladite détection d'un dysfonctionnement est effectuée par comparaison desdites données de pression avec des données relatives à la pression attendue dans la combinaison anti-G,
**caractérisé en ce que**
lesdites données de pression sont établies par une unité de capteur de pression (13) adaptée pour être portée entre la combinaison anti-G (11) et un porteur (22) de la combinaison anti-G, et ladite unité de détection de pression (13) n'est pas solidaire de la combinaison anti-G (11).

12. Procédé selon la revendication 11, dans lequel ladite transmission desdites données de pression est faite par transmission sans fil (14, 15).

13. Procédé selon la revendication 11, dans lequel ladite détection de dysfonctionnement est effectuée par comparaison desdites données de pression avec des données de pression attendue obtenues par simulation.

14. Procédé selon la revendication 11 et la revendication 13, qui fournit un signal d'alarme après la détection dudit dysfonctionnement en utilisant un système d'alarme.
